# EUROPÄISCHE PATENTSCHRIFT

(11) **EP 1 182 153 B1**
(45) Veröffentlichungstag und Bekanntmachung des Hinweises auf die Patenterteilung: **12.11.2003**
(21) Anmeldenummer: 01117895.1
(22) Anmeldetag: 24.07.2001
(51) Int. Cl.: B65G 54/02

(54) **Fördervorrichtung zum Transportieren von Behältern**
Conveyor for transporting containers
Convoyeur pour le transport de récipients

(30) Priorität: 18.08.2000 DE 10040531; 18.08.2000 DE 10040532
(43) Veröffentlichungstag der Anmeldung: 27.02.2002
(73) Patentinhaber: KHS Maschinen- und Anlagenbau Aktiengesellschaft, 44143 Dortmund (DE)
(72) Erfinder: Strohn, Gisbert, 58313 Herdecke (DE)

(56) Entgegenhaltungen:
- EP-A- 0 963 931
- DE-A- 4 133 114
- FR-A- 2 785 891
- US-A- 4 716 346
- US-A- 5 937 998

## Beschreibung

Die Erfindung bezieht sich auf eine Fördervorrichtung zum Transportieren von Behältern, wie Kunststoff-Flaschen und dergleichen.

Zum Transportieren von Kunststoff-Flaschen, insbesondere in der Getränkeindustrie, ist es bekannt, die Flaschen mittels sogenannter Luftförderer zu transportieren, wobei Gleitbahnen vorgesehen sind, die sich innerhalb eines Luftfördersystems befinden. Das Luftfördersystem besteht aus einem Luftkanal mit seitlich oder von oben auf die Gefäße gerichteten Luftaustrittsdüsen, wobei durch erhöhte Luftaustrittsgeschwindigkeit eine entsprechende Fortbewegung der Flaschen erfolgt. Insbesondere in der Getränkeindustrie ist die in den Hallen befindliche Luft mit getränkeschädigenden Mikroorganismen und dergleichen kontaminiert, so daß auch die zur Fortbewegung der Kunststoff-Flaschen angesaugte Umgebungsluft entsprechend geschädigt ist. Bei der Art und Ausbildung des Lufttransportes läßt es sich nicht vermeiden, daß die angesaugte Luft in verstäktem Maße in das Flascheninnere vordringt und auf diese Weise eine Vorbelastung des Flascheninnenraumes verursacht. Dieses kann bei der anschließenden Befüllung solcher Kunststoff-Flaschen zu entsprechenden Schädigungen des Getränks führen.

Es ist auch bekannt, daß die Gleitbahn aus einer Vielzahl von hintereinander angeordneten Schiebekörpern besteht, die entlang einer eigenen Führungsebene fortbeweglich gelagert sind.

Ebenfalls bekannt ist eine Lösung nach der EP 0 963 931, bei welcher Behälter wie z.B. Kunststoffflaschen anhand von Schiebekörpem entlang einer Führungsbahn bewegt werden, wobei auch bei dieser Vorrichtung Linearantriebe zur Anwendung gelangen. Dabei ist in der EP 0 963 931 vorgesehen, dass einige der Schiebekörper als antreibende Vorschubeinheiten ausgebildet sind, wobei die zur Realisierung des Linearantriebs ebenfalls erforderlichen Statoren mit einigem Abstand über und/oder neben der Bewegungsbahn der Schiebekörper angeordnet sind. Von besonderem Nachteil an einer Vorrichtung gemäß der EP 0 963 931 ist der große Abstand zwischen Statoren und Vorschubeinheiten, da die Erzeugung der Bewegung der Vorschubeinheiten anhand von magnetischen Kraftwirkungen erfolgt,
wobei die magnetische Kraftwirkung in starkem Maße mit der Entfernung abnimmt. Ein großer Abstand zwischen Vorschubeinheiten und Statoren bedingt folglich starke elektromagnetische Felder, welche wiederum hohe elektrische Leistungen mit damit verbundenen hohen Energiekosten bedingen.

Der vorliegenden Erfindung liegt die Aufgabe zugrunde, einen Förderer für Kunststoff-Flaschen, insbesondere im Bereich der Getränkeindustrie zu schaffen, der einen ähnlich einfachen Transport von Flaschen oder Behältern zuläßt.

Diese Aufgabe wird bei einer Fördervorrichtung der eingangs genannten Art durch die kennzeichnenden Merkmale des Anspruchs 1 gelöst.

Weitere Merkmale ergehen aus den verbleibenden Unteransprüchen.

Mit der erfindungsgemäß vorgeschlagenen Ausgestaltung ist eine geschlossene Förderung für die Behälter durch die aneinandergereihten Schiebekörper gegeben, wobei die Schiebekörper bzw. deren Vorschubeinheiten selbst die Fortbewegung vollziehen. Die einzelnen Schiebekörper werden zweckmäßig durch auf Förderabschnitte verteilte Vorschubeinheiten angetrieben, so daß verschiedene Förderabschnitte aus einzelnen, nicht angetriebenen Schiebekörpern bestehen können, denen eine Vorschubeinheit zugeordnet ist, die ihrerseits ebenfalls eine praktisch nahtlose Verbindung der Förderstrecke mit den weiteren Schiebekörpern sicherstellt.

Im nachfolgenden wird die Erfindung anhand eines Ausführungsbeispiels näher erläutert.

In der Zeichnung zeigt:
- Figur 1: eine Seitenansicht einer gattungsgemäßen Fördervorrichtung,
- Figur 2: einen Querschnitt dazu,
- Figur 2a-2c: die erfindungsgemäße Fördervorrichtung
- Figur 3: die Anordnung einer Streckenführung und
- Figur 4: die Umlenkbereiche der Fördervorrichtung

Die Fördervorrichtung besteht aus einem Fördergerüst 1, welches beispielsweise schienenartig ausgebildete Abstützflächen 2 für die Schiebekörper 3 und Vorschubeinheiten 4 aufweist. Diese können mit Laufrädern 5 oder Gleitschuhen oder anderweitig innerhalb des Fördergerüstes abgestützt sein. Jeder Schiebekörper 3 weist zudem einen Greifer 6 auf, mit dem eine Flasche 7 beispielsweise am Mündungsbereich 8 erfaßt werden kann. Eine Vielzahl solcher hintereinander angeordneter Schiebekörper 3 bildet den eigentlichen Transporteur für die zu transportierenden Flaschen 7. Dabei hat es sich als zweckmäßig erwiesen, daß einer bestimmten Zahl von hintereinander angeordneten nichtangetriebenen Schiebekörpern 3 ein weiterer angetriebener Schiebekörper als Vorschubeinheit 4 zugeordnet ist. Dieser bildet mit weiteren nachfolgenden Schiebekörpern und Vorschubeinheiten eine geschlossene Gleitbahn. Die einzelnen Vorschubeinheiten 4 der Schiebekörper 3 sind als Linearantrieb ausgebildet, wobei die Führungsebene der Schiebekörper 3 und Vorschubeinheiten 4 als Stator und die Vorschubeinheit selbst als Läufer ausgebildet ist. Der Antrieb erfolgt zweckmäß nach dem Wicklungsstator-Prinzip. Dieses ermöglicht, daß der Antrieb der Vorschubeinheiten 4 nur auf bestimmten Förderabschnitten wirksam sein muß und die auf dem nicht wirksamen Förderabschnitten befindlichen Schiebekörper und ggf. auch Vorschubeinheiten von der oder den Vorschubeinheiten, die sich im aktiven Förderabschnitt befinden, mitbewegt werden.

Demzufolge sind mindestens bestimmte Abschnitte 9 des Fördergerüstes 1 mit einem Stator 10 ausgestattet, der die in diesem Bereich jeweils befindliche Vorschubeinheit 4 entsprechend fortbewegt und somit die vor dieser befindlichen Schiebekörper 3 ebenfalls mitbewegt und gegen die vorhergehende Vorschubeinheit ohne Zwischenraum anreiht. Die Länge solcher Antriebsabschnitte 9 und deren Abstände zueinander können entsprechend der erforderlichen Vorschubkraft frei gewählt werden.

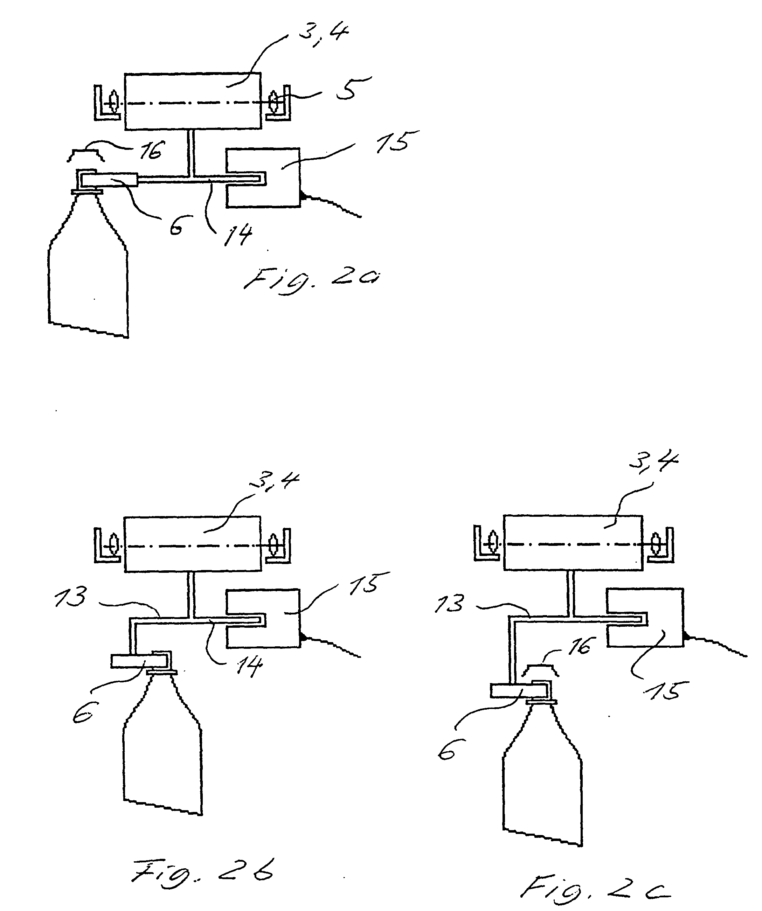

Am Ende des vorgesehenen Förderweges der Flaschen 7 bewegen sich die Schiebekörper zweckmäßig einer horizontalen (Fig. 5) oder vertikalen (Fig. 4) kreisförmigen Bahn 11 in den Leerförderabschnitt 12. Vor diesem Bereich kann die Übergabe der Behälter durch im Tangierungsbereich angeordnete Mitnahmeeinrichtungen erfolgen. Auch ist es möglich, die Behälter jeweils durch seitlich angreifende Transporteinrichtungen jeweils taktweise einzeln oder in größeren Stückzahlen auszuführen und zu den betreffenden Behandlungsmaschinen weiterzuleiten.

Besonders vorteilhaft können entsprechende Weichenanordnungen zur Zu- und Abführung einzelner Flaschengruppen zu oder von weiteren Zwischenbahnen oder Behandlungsmaschinen eingegliedert sein.

Die Greiferelemente 6 können verschiedenartig ausgebildet sein, also zum seitlichen oder auch oberen Erfassen von Mündungen ausgelegt sein. Auch ein Ergreifen durch Hohlgreifer, die in die Mündung von Behältern einführbar sind, ist denkbar. Es können Klammergreifer oder dgl. ebenso wie Sauggreifer vorgesehen sein, wobei die Sauggreifer während der Übernahme der Behälter kurzfristig mit Vakuum beaufschlagbar sind und dann praktisch selbsthemmend durch den geringen Unterdruck in den Behältern diese halten. Alle Arten von eingesetzten Greifern sind entsprechend von außen ansteuerbar.

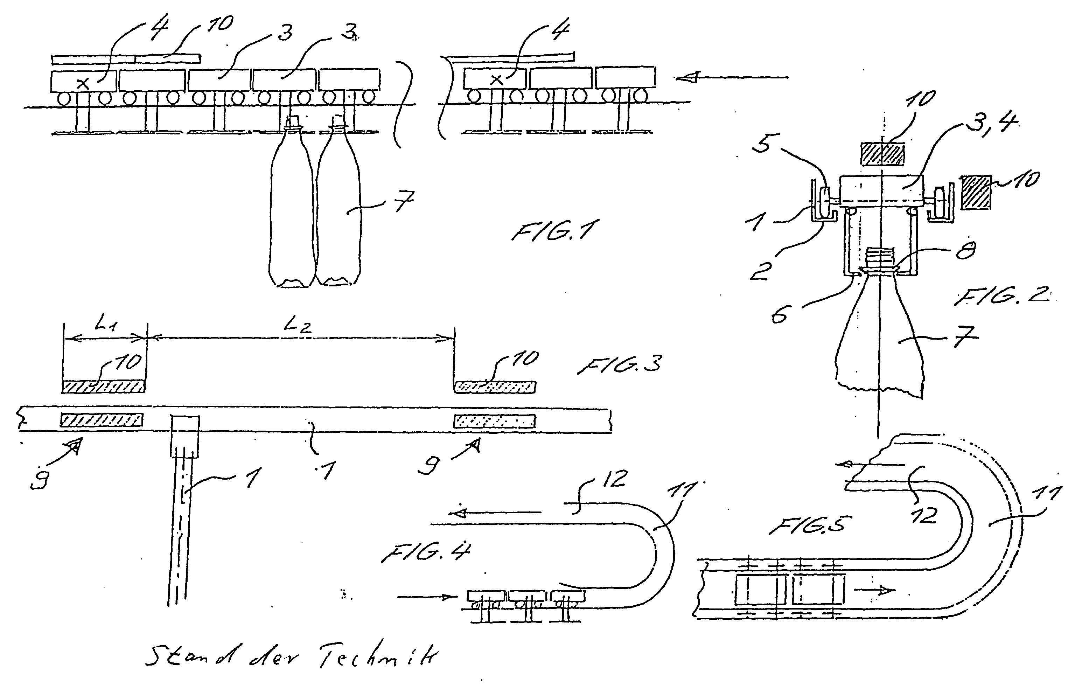

Gemäß den Figuren 2a bis 2c weist der Schiebekörper 3,4 eine Tragplatte 13 auf, die zweckmäßig auch als Antriebs- bzw. Förderplatte ausgebildet ist und mit einem Teilbereich 14 als seitlicher Ausleger in einer schlitzförmig ausgebildeten Linearantriebseinheit 15 geführt ist. Der Teilbereich 14 kann oberhalb, unterhalb oder auch seitlich der Schiebekörper ausgeführt sein.

Bei einer unterhalb des Schiebekörpers vorhandenen Tragplatte 13, wie in den Figuren 2a-2c dargestellt, kann diese auch zur Aufnahme von Flaschengreifern 6 ausgebildet sein. Wie die diesbezüglichen Figuren zeigen, können verschiedenartige Anordnungen der Flaschengreifer 6 vorgesehen sein. Vorzugsweise sind die Flaschengreifer 6 als seitlicher Klammergreifer ausgebildet und in eine Öffnungsposition von außen ansteuerbar. Oberhalb der Flaschenbewegungsebene ist vorzugsweise ein Schutzdach 16 für die Mündungen vorgesehen. Zusätzlich sind gegebenenfalls Inertgaszuführungen vorgesehen, mit denen der Flascheninnenraum und/oder die Flaschenmündungen mit Inertgas oder dgl. schon während des Transportes beaufschlagt werden können.

## Patentansprüche

1. Fördervorrichtung zum Transportieren von Behältern wie Flaschen und dergleichen mit mindestens einem Schiebekörper und einem Linearantrieb, **dadurch gekennzeichnet, dass** der mindestens eine Schiebekörper (3,4) eine Tragplatte (13) als Förderplatte aufweist, die ihrerseits mindestens teilweise in einer Schlitzführung einer Linearantriebseinheit (15) geführt ist.

2. Vorrichtung nach Anspruch 1, ***dadurch gekennzeichnet, daß*** die Tragplatte (13) als Förderplatte ausgebildet ist und oberhalb des Schiebekörpers (3,4) und/oder seitlich von diesem endet.

3. Vorrichtung nach Anspruch 1, ***dadurch gekennzeichnet, daß*** die Tragplatte (13) unterhalb des Schiebekörpers (3,4) verläuft und zur Aufnahme von Flaschengreifern (6) ausgebildet ist.

4. Vorrichtung nach Anspruch 3, ***dadurch gekennzeichnet, daß*** die Greifer (6) als Klammergreifer ausgebildet sind.

5. Vorrichtung nach den Ansprüchen 3 oder 4, ***dadurch gekennzeichnet, daß*** die Greifer (6) seitlich der Mündung einer Flasche (7) ausgebildet sind.

6. Vorrichtung nach den vorhergehenden Ansprüchen, ***dadurch gekennzeichnet, daß*** oberhalb der Führungsbahn der Flaschen ein diese überdeckendes Schutzdach (16) vorgesehen ist.

7. Vorrichtung nach Anspruch 6, ***dadurch gekennzeichnet, daß*** das Schutzdach (16) mit Inertgaszuführungen zur Beaufschlagung der Flaschen (7) und der Flaschenmündungen ausgestattet ist.

8. Fördervorrichtung gemäß Anspruch 1, ***dadurch gekennzeichnet, daß*** eine Vielzahl von hintereinander angeordneten Schiebekörpern (3) eine Trägerbahn für die Gefäße (7) bildet und innerhalb eines Förderabschnitts mindestens ein Schiebekörper als Vorschubeinheit (4) für die restlichen Schiebekörper (3) ausgebildet ist.

9. Fördervorrichtung gemäß den vorhergehenden Ansprüchen 1 und 2, ***dadurch gekennzeichnet, daß*** einer bestimmten Anzahl von nicht angetriebenen Schiebekörpern (3) mindestens ein antreibbarer Schiebekörper (4) zugeordnet ist.

10. Fördervorrichtung gemäß den vorhergehenden Ansprüchen, ***dadurch gekennzeichnet, daß*** die Schiebekörper (3) auf der Behälterförderstrecke eine geschlossene Trägerbahn bilden, auf der bei aufgestauten Gefäßen die jeweiligen angetriebenen Schiebekörper (4) mit den nichtangetriebenen Schiebekörpern (3) weiterbewegt werden und eine Mitnahme der Gefäße durch die bewegte Reihe von Schiebekörpern erfolgt.

11. Fördervorrichtung gemäß den vohergehenden Ansprüchen, ***dadurch gekennzeichnet, daß*** der Antrieb der Vorschubeinheiten (4) nur auf bestimmten Förderabschnitten (9) wirksam ist und die auf den nicht wirksamen Förderabschnitten befindlichen Schiebekörper und Vorschubeinheiten von der oder den Vorschubeinheiten (4) im aktiven Förderabschnitt (9) mitbewegt werden.

12. Fördervorrichtung nach einem der Ansprüche 8 bis 11, **dadurch gekennzeichnet, dass** die Förderbahn am Ende des Förderwegs kreisförmig zurückgeführt ist und eine Übergabevorrichtung für die Behälter (7) aufweist.

13. Fördervorrichtung nach Anspruch 12, ***dadurch gekennzeichnet, daß*** die Übergabe der Behälter (7) taktweise erfolgt, wobei eine Vielzahl von Behältern (7) abschnittsweise übergeben wird.

14. Fördervorrichtung nach Anspruch 3, ***dadurch gekennzeichnet, daß*** der Schiebekörper ansteuerbare Sauggreifer aufweist.

15. Fördervorrichtung nach Anspruch 14, **dadurch gekennzeichnet, dass** Greifer vorgesehen sind, welche zum Erfassen der Behälter in deren Mündungsbereich eingreifen.

## Claims

1. Conveying apparatus for transporting containers, such as bottles and the like, said apparatus having at least one travelling body and a linear drive, **characterised in that** the at least one travelling body (3, 4) has a supporting plate (13) as the conveying plate which, in turn, is guided at least partially in a guide slot of a linear drive unit (15).

2. Apparatus according to claim 1, **characterised in that** the supporting plate (13) is in the form of a conveying plate and terminates above the travelling body (3, 4) and/or laterally thereof.

3. Apparatus according to claim 1, **characterised in that** the supporting plate (13) extends beneath the travelling body (3, 4) and is provided for the accommodation of bottle gripping means (6).

4. Apparatus according to claim 3, **characterised in that** the gripping means (6) are in the form of clamp-type gripping means.

5. Apparatus according to claims 3 or 4, **characterised in that** the gripping means (6) are provided laterally of the mouth of a bottle (7).

6. Apparatus according to the preceding claims, **characterised in that** a protective roof (16) is provided above the guide path of the bottles and covers said bottles.

7. Apparatus according to claim 6, **characterised in that** the protective roof (16) is provided with inert gas supply means for acting on the bottles (7) and the bottle mouths.

8. Conveying apparatus according to claim 1, **characterised in that** a plurality of travelling bodies (3), which are disposed behind one another, form a carrier path for the vessels (7), and at least one travelling body is provided as the advancing unit (4) for the remaining travelling bodies (3) internally of a conveying portion.

9. Conveying apparatus according to the preceding claims 1 and 2, **characterised in that** at least one drivable travelling body (4) is associated with a specific number of non-driven travelling bodies (3).

10. Conveying apparatus according to the preceding claims, **characterised in that** the travelling bodies (3) form, on the container conveying track, a closed carrier path on which, when the vessels have accumulated, the respective driven travelling bodies (4) are displaced further with the non-driven travelling bodies (3), and the vessels are entrained by the moving row of travelling bodies.

11. Conveying apparatus according to the preceding claims, **characterised in that** the drive of the advancing units (4) is only effective on specific conveying portions (9), and the travelling bodies and advancing units, situated on the non-effective conveying portions, are jointly moved by the advancing unit or units (4) in the active conveying portion (9).

12. Conveying apparatus according to one of claims 8 to 11, **characterised in that** the conveying path leads back in a circular manner at the end of the conveying route and has an apparatus for transferring the containers (7).

13. Conveying apparatus according to claim 12, **characterised in that** the containers (7) are transferred cyclically, a plurality of containers (7) being transferred in groups.

14. Conveying apparatus according to claim 3, **characterised in that** the travelling body has actuatable suction-type gripping means.

15. Conveying apparatus according to claim 14, **characterised in that** gripping means are provided which, in order to grip the containers, engage in the mouth region of said containers.

## Revendications

1. Dispositif de transport destiné à transporter des récipients, tels que des bouteilles et similaires, comprenant au moins un corps coulissant et un dispositif d'entraînement linéaire, **caractérisé en ce que** le corps coulissant (3, 4), au nombre minimum d'un, présente une plaque porteuse (13) qui sert de plaque de transport, qui est guidée, au moins partiellement, dans une fente de guidage d'une unité d'entraînement linéaire (15).

2. Dispositif selon la revendication 1, **caractérisé en ce que** la plaque porteuse (13) est conformée en plaque de transport et se termine au-dessus du corps coulissant (3, 4) et/ou sur le côté de celui-ci.

3. Dispositif selon la revendication 1, **caractérisé en ce que** la plaque porteuse (13) est située sous le corps coulissant (3, 4) et est conçue pour recevoir des dispositifs preneurs de bouteilles (6).

4. Dispositif selon la revendication 3, **caractérisé en ce que** les dispositifs preneurs (6) sont conformés en pinces preneuses.

5. Dispositif selon les revendications 3 ou 4, **caractérisé en ce que** les dispositifs preneurs (6) sont situés sur le côté de l'embouchure d'une bouteille (7).

6. Dispositif selon les revendications précédentes, **caractérisé en ce qu'**est prévu, au-dessus de la glissière de guidage des bouteilles, un toit de protection (16) qui les recouvre.

7. Dispositif selon la revendication 6, **caractérisé en ce que** le toit de protection (16) est équipé d'amenées de gaz inerte afin de remplir les bouteilles (7) et les embouchures de bouteilles.

8. Dispositif de transport selon la revendication 1, **caractérisé en ce qu'**une pluralité de corps coulissants (3), placés les uns derrière les autres, forme une glissière porteuse pour les récipients (7) et **en ce qu'**à l'intérieur d'un tronçon de transport, au moins un corps coulissant sert d'unité d'avance (4) pour les corps coulissants (3) restants.

9. Dispositif de transport selon les précédentes revendications 1 et 2, **caractérisé en ce qu'**au moins un corps coulissant (4) susceptible d'être entraîné est associé à un nombre déterminé de corps coulissants (3) non entraînés.

10. Dispositif de transport selon les revendications précédentes, **caractérisé en ce que** les corps coulissants (3) présents sur la voie de transport forment une glissière porteuse fermée, sur laquelle, lorsque les récipients s'accumulent, les corps coulissants (4) entraînés sont déplacés en même temps que les corps coulissants (3) non entraînés, et les récipients sont entraînés par la série déplacée de corps coulissants.

11. Dispositif de transport selon les revendications précédentes, **caractérisé en ce que** l'entraînement des unités d'avance (4) n'est actif que dans certains tronçons de transport (9) et **en ce que** les corps coulissants et unités d'avance qui se trouvent dans les tronçons de transport non actifs sont déplacés en même temps que la ou les unités d'avance (4) qui se trouve(nt) dans le tronçon de transport (9) qui est actif.

12. Dispositif de transport selon l'une des revendications 8 à 11, **caractérisé en ce que** la glissière de transport, à la fin du parcours, décrit un retour circulaire et comprend un dispositif de transfert pour les récipients (7).

13. Dispositif de transport selon la revendication 12, **caractérisé en ce que** le transfert des récipients (7) s'effectue par intermittence, une pluralité de récipients (7) étant transférée par lots.

14. Dispositif de transport selon la revendication 3, **caractérisé en ce que** le corps coulissant présente des dispositifs preneurs à aspiration susceptibles d'être commandés.

15. Dispositif de transport selon la revendication 14, **caractérisé en ce que** sont prévus des dispositifs preneurs qui, pour saisir les récipients, pénètrent dans leur embouchure.
